**Europäisches Patentamt**

**European Patent Office**

**Office européen des brevets**

(11) Veröffentlichungsnummer : **0 316 827 B1**

(12) **EUROPÄISCHE PATENTSCHRIFT**

(45) Veröffentlichungstag der Patentschrift :
15.05.91 Patentblatt 91/20

(51) Int. Cl.⁵ : **C10B 53/00**

(21) Anmeldenummer : **88118901.3**

(22) Anmeldetag : **12.11.88**

(54) **Verfahren zum Verringern der Nebenprodukte bei der Erzeugung von Pyrolysegas.**

(30) Priorität : **19.11.87 DE 3739157**
**14.10.88 DE 3835038**

(43) Veröffentlichungstag der Anmeldung :
**24.05.89 Patentblatt 89/21**

(45) Bekanntmachung des Hinweises auf die
Patenterteilung :
**15.05.91 Patentblatt 91/20**

(84) Benannte Vertragsstaaten :
**AT BE CH DE GB IT LI NL SE**

(56) Entgegenhaltungen :
**EP-A- 0 167 702**
**EP-A- 0 226 895**
**DE-A- 2 646 729**
**US-A- 4 364 796**

(73) Patentinhaber : **Asea Brown Boveri**
**Aktiengesellschaft**
**Kallstadter Strasse 1**
**W-6800 Mannheim 31 (DE)**

(72) Erfinder : **Betz, Monika, Dr. rer. nat.**
**Seestrasse 13**
**W-6834 Ketsch (DE)**

(74) Vertreter : **Rupprecht, Klaus, Dipl.-Ing. et al**
**c/o Asea Brown Boveri Aktiengesellschaft**
**Zentralbereich Patente Postfach 100351**
**W-6800 Mannheim 1 (DE)**

## Beschreibung

Die Erfindung betrifft ein Verfahren zum Verringern der Nebenprodukte und/oder der darin enthaltenen unerwünschten Verbindungen bei der Erzeugung von Pyrolysegas aus kohlenwasserstoffhaltigem Ausgangsmaterial, insbesondere Abfallmaterial, wobei das Pyrolysegas durch pyrolytische Zersetzung des Ausgangsmaterials in einem Pyrolysereaktor in reduzierender Atmosphäre erzeugt und der vom Pyrolysegas mitgeführte Wasserdampf in einer Kühlstufe als Prozeßwasser niedergeschlagen wird.

Pyrolysegas, das durch die thermische Zersetzung von Abfallmaterial gewonnen wird, enthält Kohlenwasserstoffe sowie je nach Art und Zusammensetzung des Ausgangsmaterials eine Reihe von unerwünschten Schadstoffen : Verbindungen des Stickstoffs, Chlors, Schwefels, Fluors und Cyanverbindungen (DE-A-29 44 989). Zur Verringerung dieser als Nebenprodukte anfallenden Komponenten ist es bekannt, ein basisches Bindemittel, z.B. Kalk, in den als Pyrolysereaktor dienenden Drehrohrofen einzugeben. Dies hat jedoch den Nachteil, daß, bezogen auf das Ausgangsmaterial, verhältnismäßig viel Kalk verwendet werden muß. Hinzu kommt noch, daß sich der Pyrolyserückstand mit dem mit den Schadstoffen abreagierten Kalk vermischt und somit eine entsprechend große Menge an Nebenprodukten mit hohem Anteil an Schadstoffen anfällt, deren Entsorgung kostspielig ist. Die genannte DE-A-2944989 schlägt daher einen Weg vor, der geringe Mengen an Bindemittel erfordert und den Schadstoffanteil in dem als Nebenprodukt anfallenden Pyrolyserückstand merklich verringert.

Wahrend der Kühlung des Pyrolysegases unter den Wassertaupunkt – dies geschieht, um das im Pyrolysegas enthaltene leichtsiedende Pyrolyseöl zu gewinnen – schlägt sich der vom Pyrolysegas mitgeführte oder der darin enthaltene Wasserdampf als Prozeßwasser nieder. Wahrend des Kondensationsvorgangs nimmt das Prozeßwasser Bestandteile des Pyrolysegases auf. Je nach Art und Zusammensetzung des Ausgangsmaterials sind im Pyrolysegas neben reinen Kohlenwasserstoffen auch Schadstoffe wie Halogenkohlenwasserstoffe, Cyanwasserstoffgas, Schwefelwasserstoff, Schwermetalle und unerwünschte heteroatomhaltige Verbindungen, wie z.B. Nitrile, pyrrolische Verbindungen und dergleichen enthalten. Da das Prozeßwasser wegen der in ihm enthaltenen Schadstoffe nur mit erheblichen Kosten zu entsorgen ist, z.B. Lagerung in einer Deponie, besteht Interesse daran, die Menge des Prozeßwassers zu verringern und/oder dessen Schadstoffanteil möglichst klein zu halten.

Desweiteren ist ein Verfahren zum Verkoken eines Gummi enthaltenden organischen Abfallproduktes in Anwesenheit von überhitztem Wasserdampf bekanntgeworden (DE-A-26 46 729). Das gewonnene, gasförmige Produkt wird kondensiert und der Wasserdampf als Wasser zurückgewonnen. Dieses zurückgewonnene Wasser wird erneut zur Erzeugung des überhitzten Wasserdampfes benutzt. Da ein auftretendes Wasserdefizit durch Frischwasser ersetzt werden muß, besteht keine Veranlassung, die durch Kondensation gewonnene Wassermenge zu verringern.

Schließlich ist die Umwandlung von Abfallmaterial in Schweröl oder halbfestes, bitumenähnliches Material in einem Autoklaven unter Druck und in Anwesenheit von Kohlenmonoxid und Wasser bekannt (US-A-37 33 255). Das Kohlenmonoxid und das Wasser dienen hierbei als Hilfsmittel bei der Umwandlung des Abfallmaterials. Um hierbei die Produktion von Schweröl oder Bitumen zu steigern, wird das bei der Umwandlung des Abfallmaterials anfallende Wasser in die Reaktionszone zurückgeführt und zusammen mit zusätzlichem Abfallmaterial erhitzt. Es besteht daher keine Veranlassung, die anfallende Wassermenge zu verringern.

Aufgabe der Erfindung ist es daher, das Verfahren der eingangs genannten Art so weiterzubilden, daß auf einfache Weise der Anteil des Nebenprodukts Prozeßwasser möglichst gering gehalten wird und-/oder daß die im Prozeßwasser enthaltenen Schadstoffe sowie unerwünschte Verbindungen verringert werden.

Die Lösung dieser Aufgabe besteht nun erfindungsgemäß darin, daß das Prozeßwasser mindestens teilweise in das im Pyrolysereaktor ausgebildete, zum pyrolytischen Verarbeiten des Ausgangsmaterials benutzte und bei einer Temperatur oberhalb 650° Celsius arbeitende Wirbelbett eingeführt wird.

Hierdurch wird zunächst eine Verringerung der Prozeßwassermenge erreicht. Denn auf dem Wirbelmaterial des Wirbelbettes, vorzugsweise feinkörniger Sand, schlägt sich während des Betriebs Kohlenstoff nieder, der mit zumindest einem Teil des zugeführten Prozeßwassers, das im Reaktor verdampft ist, unter der reduzierenden Atmosphäre des Wirbelbettes bei einer Mindesttemperatur von ungefähr 650° Celsius reagiert. Der Prozeßwasserdampf wird hierbei in Wasserstoff ($H_2$) und Kohlenmonoxid (CO) gespalten. Da diese beiden Gase brennbar sind, führen sie zu einer wertvollen Bereicherung des brennbaren Pyrolysegases. Eine Verringerung der Schadstoffanteile wird darüber hinaus erzielt : Das zugeführte Prozeßwasser durchläuft nämlich – gasförmig – den im Pyrolysereaktor ablaufenden Pyrolysevorgang, es wird sozusagen pyrolytisch gereinigt. Hierdurch werden insbesondere im Prozeßwasser noch enthaltene größere Moleküle aufgespalten, entfunktionalisiert und liefern damit niedermolekulare Verbindungen, die vorzugsweise auch bei niedrigeren Temperaturen – unter 50°C – in der Gasphase bleiben und ein geringeres oder kein Schadstoffpotential aufweisen. Für die vorgenannten Reaktionen ist eine Mindesttemperatur von 650° Celsius erforderlich, bessere Ergebnisse werden jedoch bei einer Mindesttemperatur von 700° Celsius erzielt. Als obere Grenze der Arbeitstemperatur gilt ein Wert von ungefähr 1000° Celsius. Durch das Zusammenwirken der erfindungsgemäßen Maßnahmen wird somit die der Erfindung zugrundeliegende Aufgabe auf überraschend einfache Weise gelöst.

Vorzugsweise wird das gesamte Prozeßwasser in das Wirbelbett eingeführt.

Um günstige Ergebnisse zu erzielen, ist eine hohe Verweilzeit des eingespeisten Prozeßwassers im Wirbelbett anzustreben. Es empfiehlt sich daher, das Prozeßwasser im tiefsten Bereich des Wirbelbettes einzuführen. Das ist meist dann gegeben, wenn das Prozeßwasser vorteilhaft in der Nähe des Wirbelgaseinlasses in das Wirbelbett eingeführt wird.

Da für die Reaktion des Prozeßwassers im Wirbelbett das Prozeßwasser in Dampfform vorliegen muß, ist es erforderlich, für eine möglichst rasche Verdampfung des Prozeßwassers im Wirbelbett Sorge zu tragen. Es empfiehlt sich daher, daß das Prozeßwaser in feinverteilter Form in den Pyrolysereaktor eingeführt wird. Zweckmäßig geschieht das mit Hilfe wenigstens einer Sprühdüse, vorzugsweise sind mehrere Sprühdüsen vorgesehen.

Der Massenstrom des Prozeßwassers, der zugeführt wird, soll mindestens ungefähr bei 3 bis 5% liegen, wobei die Bezugsbasis der Massenstrom des Ausgangsmaterials ist, der dem Wirbelbett zugeführt wird. Im bevorzugter Weise wird das Prozeßwasser mit einem Massenstrom von ungefähr 10% zugeführt. Hierdurch wird auf der einen Seite eine weitgehende Verringerung des Prozeßwassers erzielt und auf der anderen Seite der Pyrolysevorgang kaum beeinträchtigt. Ein zu hoher Massenstrom des Prozeßwassers könnte nämlich zu unerwünscht großen Temperatursenkungen des Wirbelbettes führen oder den Aufwand für die Beheizung des Wirbelbettes stark erhöhen.

Enthält das in der Wirbelschicht erzeugte Pyrolysegas einen oder mehrere der eingangs genannten Schadstoffe und Komponenten, so wird in bevorzugter Weise ein basisches Bindemittel feinverteilt in das Wirbelbett eingebracht. Als basisches Bindemittel dient hierbei vorteilhaft wenigstens ein Stoff aus folgender Gruppe : Calciumcarbonat, Kalkhydrat, Calciumoxid, Magnesiumcarbonat, Magnesiumoxid, Magnesiumhydroxid, Dolomit, Natriumcarbonat oder Natriumhydroxid. Da im Wirbelbett eine innige Durchmischung des Bindemittels mit dem entstehenden Pyrolysegas erfolgt, es in den meisten Fällen für eine Bindung der Schadstoffe ausreichend, daß das Bindemittel in stöchiometrischem Verhältnis zugeführt wird.

Gemäß einer vorteilhaften Weiterbildung der Erfindung wird vor dem Eintritt des Prozeßwassers in das Wirbelbett ein Teil des Prozeßwassers abgezweigt und in das vom Gasraum des Pyrolysereaktors abströmende Pyrolysegas eingeführt. Hierdurch wird das abströmende Pyrolysegas gekühlt und damit die thermische Belastung der Rohgasleitung und der weiteren daran angeschlossenen Bauteile verringert. Die Lebensdauer dieser Bauteile ist dadurch wesentlich vergrößert. Die Einführung des abgezweigten Prozeßwassers in das heiße Pyrolysegas ist dann besonders zu empfehlen, wenn das Wirbelbett durch Heizrohre beheizt wird, die zusätzlich Wärme an den Gasraum oberhalb des Wirbelbetts abgeben und das Pyrolysegas aufheizen. Dies ist der Fall bei einer vertikalen Einführung der Heizrohre durch die Decke des Pyrolysereaktors bis in das Wirbelbett.

Zweckmäßig wird das abgezweigte Prozeßwasser in der Nähe des Pyrolysereaktors in die Rohgasleitung eingeführt. Hierbei hat die Einführungsstelle des Prozeßwassers vom Pyrolysereaktor vorteilhaft einen Abstand, der gleich ist dem 2 bis 5-fachen der lichten Weite der Rohgasleitung. Durch diese Maßnahme wird eine rasche Verdampfung und wirksame Abkühlung des Pyrolysegases erreicht. Diese Abkühlung liegt zwischen 50 und 150° Celisus, so daß die Lebensdauer der Rohgasleitung und der weiteren, vom heißen Pyrolysegas beaufschlagten Bauteile spürbar vergrößert ist.

Am günstigsten ist es, wenn 1/3 bis 1/7, vorzugsweise 1/5 des Prozeßwassers abgezweigt und in das Pyrolysegas eingeführt wird. Hierdurch wird eine ausreichende Verringerung des Prozeßwassers und zugleich eine spürbare Verringerung der Temperatur des Pyrolysegases erzielt.

Weitere Vorteile und Merkmale der Erfindung gehen aus der folgenden Beschreibung von Ausführungsbeispielen im Zusammenhang mit den schematischen Zeichnungen hervor.

Es zeigt :

Fig. 1 eine Anlage, die für die Durchführung des erfindungsgemäßen Verfahrens geeignet ist, wobei das Prozeßwasser nur in das Wirbelbett eingeführt wird und

Fig. 2 eine Ausführungsvariante der Anlage gemäß Fig. 1 mit Einführung des Prozeßwassers in das Wirbelbett und in das Pyrolysegas.

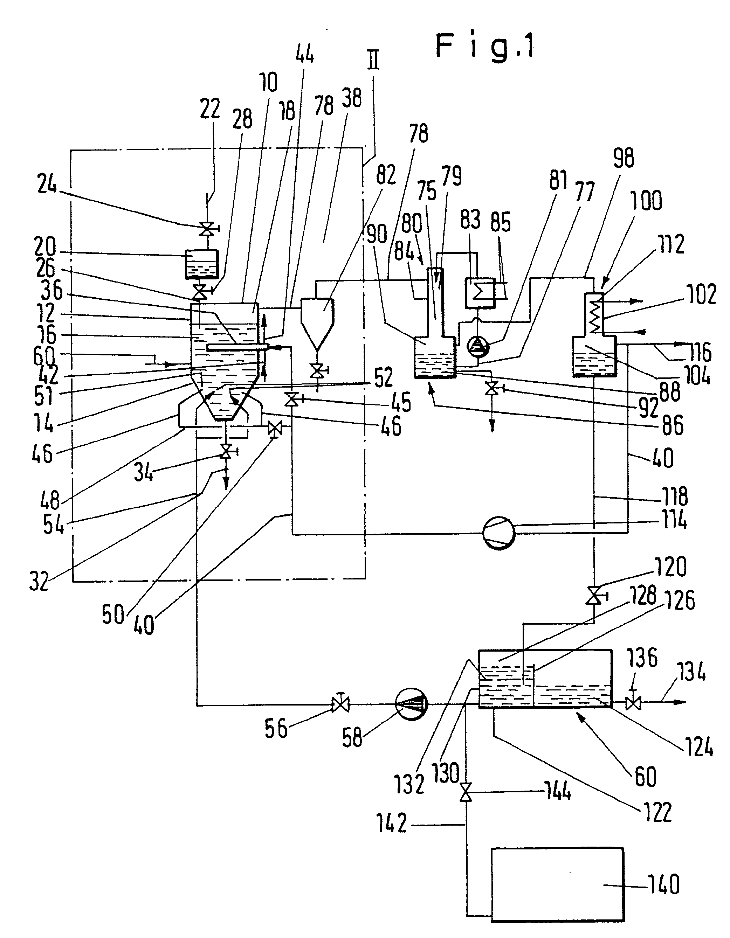

Gemäß der Fig. 1 weist der stehende Pyrolysereaktor 10 einen kreiszylindrischen oberen Bereich 12 und einen sich nach unten daran anschließenden und sich verjüngenden kreiskegelförmigen Bereich 14 auf. In dem Pyrolysereaktor 10 wird das Wirbelbett 16 derart ausgebildet, daß oberhalb des Wirbelbettes ein freier Gasraum 18 verbleibt, dessen Höhe ungefähr 20 bis 30% der Höhe des Pyrolysereaktors beträgt. Das Wirbelmaterial, mit dessen Hilfe das Wirbelbett gebildet wird, ist feinkörnig und besteht zweckmäßig aus Sand oder Aluminiumoxid.

Oberhalb des Pyrolysereaktors 10 ist ein Speicherbehälter 20 angeordnet, in den durch die Rohrleitung 22 mit eingefügtem Absperrorgan 24 das feinkörnige Bindemittel eingebracht wird. Der Speicherbehälter 20 ist durch die Leitung 26 mit eingefügtem Absperr- und Regelorgan 28 mit Gefälle mit dem Pyrolysereaktor verbunden, wobei die Leitung 26 möglichst tief im Wirbelbett 16 endet.

Am unteren Ende des Bereiches 14 ist eine Abfuhrleitung 32 für den Pyrolyserückstand an den Pyrolysereaktor 10 angeschlossen, in die ein Absperr- und Regelorgan 34 eingefügt ist.

In den oberen, kreiszylindrischen Bereich 12 des Pyrolysereaktors ist mindestens ein gasbefeuertes Heizrohr 36 vom Außenraum 38 her horizontal eingeführt. Zur Gasversorgung ist dieses Heizrohr an die Pyrolysegasleitung 40 angeschlossen, die das in der Anlage erzeugte Pyrolysegas führt. Desweiteren ist an das Heizrohr 36 noch eine Zufuhrleitung 42 für Verbrennungsluft sowie eine Abgasleitung 44 für die Abfuhr des Abgases in den Außenraum angeschlossen.

Im unteren, kreiskegelförmigen Bereich 14 des Pyrolysereaktors münden Wirbelgasleitungen 46 in den Innenraum, die an eine Gasleitung 48 angeschlossen sind. Die Gasleitung 48 ist unter Zwischenschaltung eines Absperr- und Regelorgans 50 mit der Pyrolysegasleitung 40 verbunden. Die Ausblasrichtung der Wirbelgasleitungen 46 im Pyrolysereaktor ist nach unten gerichtet und verläuft ungefähr parallel zur Wand des Pyrolysereaktors.

In der Nähe jener Stellen, an denen die Wirbelgasleitungen 46 in den Pyrolysereaktor münden, also im Bereich des Wirbelgaseinlasses 51, sind im Innenraum des Pyrolysereaktors mehrere, beispielsweise 3 bis 5 Stück, Sprühdüsen 52 vorgesehen. Diese Sprühdüsen dienen für die Einführung des Prozeßwassers in das Wirbelbett. Hierzu sind die Sprühdüsen 52 mit einer Rohrleitung 54 verbunden, die unter Zwischenschaltung eines Absperr- und Regelorgans 56 und einer Pumpe 58 zu einem Trennbehälter 60 führt. In diesem Trennbehälter 60 wird das Prozeßwasser gesammelt, der Aufbau des Trennbehälters wird später beschrieben. Die Sprühdüsen 52 sind gleichmäßig über den Querschnitt verteilt angeordnet.

Vom Gasraum 18 des Pyrolysereaktors führt eine Rohgasleitung 78 zur Kühlstufe 80, wobei in die Rohgasleitung ein Zyklonabscheider 82 eingefügt ist. Die Kühlstufe 80 arbeitet mit direkter Kühlung und weist einen Kühler 84 auf. Die Rohgasleitung 78 mündet in den oberen Bereich eines vertikalen, kreiszylindrischen Kühlkanals 75 des Kühlers 84. An das untere Ende des Kühlkanals 75 ist ein geschlossener Abscheidebehälter 86 angeschlossen. Der untere Bereich des Abscheidebehälters dient als Raum 88 für das Schweröl, der darüber verbleibende freie Raum dient als Gasraum 90. Am Raum 88 ist in der Nähe eines Bodens eine Leitung 92 mit eingefügtem Absperrorgan vorgesehen, die für den Abzug des anfallenden Schweröls dient. Desweiteren ist unten eine Leitung 77 angeschlossen, die zu einer im oberen Endbereich des Kühlkanals 75 angeordneten Sprühdüse 79 führt. Die Sprühdüse ist im Zentrum des Kühlkanals angeordnet, ihre Sprührichtung ist vertikal nach unten. In die Leitung 77 ist eine Pumpe 81 sowie ein Kühler 83 eingefügt, dessen Kühlschlange durch die Leitungen 85 mit einem Kühlmedium, vorzugsweise Kühlwasser, versorgt wird.

Vom Gasraum 90 der Kühlstufe 80 führt eine Rohrleitung 98 zum Eingang einer weiteren Kühlstufe 100, die mit indirekter Kühlung arbeitet. Die weitere Kühlstufe 100 weist einen stehenden, kreiszylindrischen weiteren Kühler 102 auf, an dessen oberes Ende die Rohrleitung 98 und an dessen unteres Ende ein Behälter 104 angeschlossen ist.

Im oberen Bereich des Behälters 104 ist die Pyrolysegasleitung 40 angeschlossen, die unter Einschaltung eines Gasverdichters 114 das für den Betrieb des Pyrolysereaktors 10 erforderliche Gas liefert. Stromauf des Verdichters 114 ist an die Pyrolysegasleitung 40 noch eine Leitung 116 angeschlossen, durch die das überschüssige Pyrolysegas entnommen wird. Falls es für die Behandlung des Pyrolysegases erforderlich oder zweckmäßig ist, ist zwischen den Behälter 104 und die Pyrolysegasleitung 40 mindestens noch eine Kühlstufe und/oder mindestens ein Gaswäscher eingefügt. Dies ist in der Zeichnung nicht dargestellt.

Der Bodenbereich des Behälters 104 ist durch eine Rohrleitung 118 mit eingefügtem Absperr- und Regelorgan 120 mit dem Trennbehälter 60 verbunden. Falls erforderlich, ist in die Leitung 118 noch eine in der Zeichnung nicht dargestellte Pumpe eingefügt. Der geschlossene Trennbehälter 60 enthält einen Abscheideraum 122 zur Phasentrennung sowie einen Raum für das leichtsiedende Pyrolyseöl, den Leichtölraum 124. Der Abscheideraum und der Leichtölraum sind durch eine Trennwand 126 voneinander getrennt. Die Trennwand 126 erstreckt sich vom Boden des Trennbehälters vertikal nach oben, ihre Höhe ist jedoch ungefähr 10 bis 30% niedriger als die lichte Höhe des Trennbehälters 60. Die Trennwand 126 bildet somit ein Überlaufwehr, über das das im Abscheideraum 122 aufgrund der geringeren Dichte aufschwimmende leichtsiedende Pyroylseöl in den Leichtölraum 124 übertritt. Da die anfallende Menge an leichtsiedendem Pyrolyseöl größer ist als die anfallende Prozeßwassermenge, beträgt der Rauminhalt des Leichtölraumes 124 ungefähr das 1,5 bis 3-fache des Rauminhalts des Abscheideraums 122.

Die vom Behälter 104 ausgehende Rohrleitung 118 mündet in den Abscheideraum 122, zweckmäßig im Bereich 132 der Phasentrennung zwischen Prozeßwasser und leichtsiedendem Pyrolyseöl, der sich ungefähr auf halber Höhe des Überlaufwehrs befindet. An den Abscheideraum 122 ist, möglichst an der tiefsten Stelle, die Rohrleitung 54 angeschlossen, die zu den im Pyrolysereaktor angeordneten Sprühdüsen 52 führt. In Strömungsrichtung gesehen ist die Pumpe 58 sowie das Absperr- und Regelorgan 56 eingefügt.

Während des Betriebs wird das in den Pyrolysereaktor eingegebene Wirbelmaterial mit Hilfe von Pyrolysegas verwirbelt, so daß das Wirbelbett 16 entsteht. Das Pyrolysegas wird hierbei durch die Wirbelgasleitungen 46 und die Gasleitung 48 aus der Pyrolysegasleitung 40 entnommen, als Wirbelgas wird somit Pyrolysegas verwendet. Hierbei wird der Fluß des Wirbelgases durch das Absperr- und Drosselorgan 50 auf das erforderliche Maß eingestellt. Zur Beheizung des Wirbelbettes wird dem Heizrohr 36 ebenfalls Pyrolysegas aus der Pyrolysegasleitung 40 zugeführt, wobei der Gasstrom durch das Absperr- und Drosselorgan 45 auf die erforderliche Heizleistung des Heizrohres 36 eingestellt wird. Das Pyrolysegas wird im Heizrohr verbrannt. Durch die Zufuhrleitung 42 wird dem Heizrohr 36 Verbrennungsluft zugeführt, die Abgase werden durch die Abgasleitung 44 vom Heizrohr 36 in den Außenraum 38 geleitet, vorteilhaft mit Hilfe eines nicht dargestellten Kamines. Durch das Heizrohr 36 wird das Wirbelbett indirekt auf die vorgesehene Mindesttemperatur von 650 bzw. 700° Celsius aufgeheizt. Vorteilhaft sind mehrere Heizrohre vorgesehen.

Gleichzeitig wird in Richtung des Pfeiles 60 durch nichtdargestellte Eintragvorrichtungen das Ausgangsmaterial in das Wirbelbett 16 eingebracht. Das Ausgangsmaterial besteht zweckmäßig aus organischem Abfallmaterial, insbesondere Kunststoffabfällen, Altreifen, Altölen, Ölrückständen, Ölschlamm oder dergleichen. Allgemein gesagt handelt es sich bei dem Ausgangsmaterial um solche Kohlenwasserstoffabfälle, die feucht sind und/oder bei der thermischen Zersetzung im Pyrolysereaktor Wassermoleküle freisetzen. Dieses Ausgangsmaterial, das vor der Pyrolyse erforderlichenfalls kleinstückig gemacht wurde, wird im Wirbelbett 16 auf die Mindestemperatur oder darüber erhitzt. Besteht das Ausgangsmaterial aus Altöl, Ölrückstand, Ölschlamm oder dergleichen, so wird das Ausgangsmaterial durch Erhitzen pumpfähig und dünnflüssig gemacht und dann durch Düsen in das Wirbelbett eingesprüht. Dies ist in den Zeichnungen nicht dargestellt.

Im Pyrolysereaktor wird das Ausgangsmaterial unter Bildung von brennbarem Pyrolysegas zersetzt, wobei die im Ausgangsmaterial enthaltene Feuchte zum Teil gasförmig ausgetrieben wird und Bestandteil des Pyrolysegases ist. Zusätzlich werden bei der Zersetzung des Ausgangsmaterials, je nach dessen Beschaffenheit, de novo Wassermoleküle gebildet, die sich ebenfalls mit dem Pyrolysegas vermischen. Dieses Pyrolysegas sammelt sich im Gasraum 18 und wird mit Hilfe der Leitung 78 durch den Zyklonabscheider 82, in dem mitgeführte Festkörper abgeschieden werden, der Kühlstufe 80 zugeführt. In der Kühlstufe 80 wird pumpfähiges Öl dem Raum 88 entnommen und durch die Pumpe 81 und den Kühler 83 in den Kühlkanal 75 gefördert und dort durch die Sprühdüse 79 versprüht. Gleichzeitig wird das Pyrolysegas in den Kühlkanal eingeleitet, so daß es zusammen mit dem versprühten Öl nach unten zum Abscheidebehälter 86 strömt. Hierbei wird das heiße Pyrolysegas auf eine Temperatur von ungefähr 150 bis 250° Celsius abgekühlt. Die hierbei vom zirkulierenden Öl aufgenommene Wärme wird vom Kühler 83 an das Kühlwasser abgegeben, das durch die Leitungen 85 zu- bzw. abgeführt wird.

Während der Abkühlung kondensiert ein Teil der Kohlenwasserstoffe des Pyrolysegases zu Schweröl und das Pyrolysegas-Schwerölgemisch strömt nach unten in den Abscheidebehälter 86. Hier trennt sich das Schweröl vom Pyrolysegas und sammelt sich im Raum 88, wogegen das Pyrolysegas sich im darüber angeordneten Gasraum 90 befindet. Das Schweröl des Raumes 88 wird mit Hilfe der Leitung 92 entnommen und einer Weiterverarbeitung zugeführt. Jedoch muß im Raum 88 immer ein ausreichender Teil des Schweröls verbleiben, damit der Betrieb der Kühlstufe 80 gesichert ist. Da die Abkühlung des Pyrolysegases in der Kühlstufe 80 bei Umgebungsdruck auf eine Temperatur von 150 bis 250° Celsius erfolgt, kondensiert der im Pyrolysegas enthaltene Wasserdampf nicht, sondern ist Bestandteil des Pyrolysegases im Gasraum 90.

Aus dem Gasraum 90 wird das Pyrolysegas durch die Rohrleitung 98 der weitere Kühlstufe 100 zugeführt. Beim Abwärtsströmen des Pyrolysegases im weiteren Kühler 102 wird das Pyroylsegas durch die Kühlschlange 112 gekühlt. Als Kühlmedium dient Kühlwasser oder Kühlsole. Im Kühler entsteht hierbei durch teilweise Kondensation der Kohlenwasserstoffe des Pyrolysegases ein leichtsiedendes Pyrolyseöl, das sich zunächst im Behälter 104 sammelt. Da das Pyrolysegas in der weiteren Kühlstufe 100 bei Umgebungsdruck auf eine Temperatur von 20 bis 60° Celsius abgekühlt wird, kondensiert der vom Pyrolysegas mitgeführte Wasserdampf und schlägt sich als Prozeßwasser nieder. Das Prozeßwasser sammelt sich zusammen mit dem leichtsiedenden Pyrolyseöl im Behälter 104 und strömt von hier durch die Rohrleitung 118 und das geöffnete Absperr- und Regelorgan 120 in den Abscheideraum 122 des Trennbehälters 60. Im Abscheideraum 122 trennen sich das leichtsiedende Pyrolyseöl und das Prozeßwasser. Infolge der gegenüber dem Prozeßwasser geringeren Dichte sammelt sich das leichtsiedende Pyrolyseöl als Schicht 128 über der Prozeßwasser-Schicht 130, die den unteren Bereich des Abscheideraums 12 ausfüllt.

Erreicht der Flüssigkeitsstand im Abscheideraum 122 die Oberkante der Trennwand 126 so läuft das leichtsiedende Pyrolyseöl über die Trennwand in den Leichtölraum 124 und wird dort gesammelt. Das leichtsiedende Pyrolyseöl wird dann nach dem Öffnen des Absperrorgans 136 mit Hilfe der Rohrleitung 134 aus dem Leichtölraum 124 abgezogen und einer Weiterverarbeitung zugeführt.

Das im unteren Bereich des Abscheideraums 122 sich sammelnde Prozeßwasser wird mit Hilfe der Pumpe 58 und der Rohrleitung 54 den Sprühdüsen 52 zugeführt, die das Prozeßwasser in den unteren Bereich des Wirbelbettes 16 einsprühen. Hierbei wird der erforderliche oder gewünschte Massenstrom des Prozeßwassers mit Hilfe des Absperr- und Regelorgans 56 einreguliert.

Da das Prozeßwasser durch die Düsen 52 in feinverteilter Form in das Wirbelbett eingebracht wird, verdampft das Prozeßwasser unmittelbar nach seinem Einbringen in das Wirbelbett. Der so entstandene Prozeßwasser-Dampf wird im Wirbelbett thermisch zersetzt und es entsteht molekularer Wasserstoff sowie Kohlenmonoxid. Hierbei spielt der Ruß- oder Kohlenstoffbelag des Wirbelschichtmaterials eine ausschlaggebende Rolle. Dieser Belag entsteht bei der Zersetzung des kohlenstoffhaltigen Ausgangsmaterials und er liefert den Kohlenstoffanteil für die Bildung von Kohlenmonoxid bei der thermischen Zersetzung des Wasserdampfes. Da sich dieser Belag immer von Neuem bildet, ist diese Reaktion auch im Langzeitbetrieb gewährleistet.

Da im Prozeßwasser in vielen Fällen noch thermisch zersetzbare polare Kohlenwasserstoffverbindungen vorhanden sind, die vom Pyrolysegas bis in die weitere Kühlstufe 100 geschleppt wurden, wird im Wirbelbett 16 gleichzeitig eine Spaltung und ein Abbau dieser meist funktionellen Gruppen enthaltenden Kohlenwasserstoffverbindungen in unproblematischere niedermolekulare Verbindungen erreicht, die gasförmig und z.T. brennbar sind und somit den Heizwert des Pyrolysegases steigern. Weiterhin reduziert sich das Schadstoffpotential der Produktwasserfraktion aufgrund der Entfunktionalisierung der organischen Fracht. Es wird somit eine Beseitigung oder zumindest eine teilweise Beseitigung des bei der Pyrolyse anfallenden Prozeßwassers auf einfache Weise erreicht und gleichzeitig die Ausbeute an brennbarem Pyrolysegas erhöht.

Werden Ausgangsmaterialien in das Wirbelbett eingebracht, die bei der pyrolytischen Zersetzung saure Schadstoffe entwickeln, so wird während des Pyrolysevorganges ein basisches Bindemittel in das Wirbelbett 16 eingebracht. Hierzu wird das basische Bindemittel, das zuvor durch die Rohrleitung 22 in den Speicherbehälter eingebracht worden war, mit Hilfe der Rohrleitung 26 in das Wirbelbett 16 eingebracht. Der Fluß des Bindemittels wird hierbei mit Hilfe des Absperr- und Regelorgans 28 eingestellt. Dieses basische Bindemittel reagiert mit den bei der Pyrolyse des Ausgangsmaterials entstehenden Schadstoffen zu unbedenklichen, festen Verbindungen, die zusammen mit den Pyrolyserückständen durch die Abfuhrleitung 32 aus dem unteren Ende des Pyrolysereaktors abgezogen werden. Im Falle des Eintrags von basischen Zuschlagstoffen und Rückführung des schadstoffhaltigen Prozeßwassers in das Wirbelbett besteht die Möglichkeit, die beim erneuten Passieren der Wirbelschicht abgespalteten sauren Komponenten zu festen, im Rückstand verbleibenden Salzen abzubinden. Damit wird neben der Entfunktionalisierung polarer Moleküle und der Reduzierung der Wasserfraktion eine Reinigung des zusätzlich entstehenden Gases erzielt.

Als basische Bindemittel werden zweckmäßig die im Patentanspruch 6 genannten Stoffe verwendet. Die Korngröße der Bindemittel beträgt vorzugsweise 0,2 bis 1 mm. Die Bindemittel werden einzeln oder als Gemische eingesetzt.

Entsteht bei der Pyrolyse von Ausgangsmaterial mehr Prozeßwasser, als für die Einspeisung in das Wirbelbett während des Pyrolysevorganges geeignet oder zulässig ist, so wird dieses überschüssige Prozeßwasser zweckmäßig einem Speicherbehälter 140 zugeführt. Dieser Speicherbehälter 140, der in Fig. 1 eingezeichnet ist, ist durch eine Rohrleitung 142 mit eingefügtem Absperrorgan 144 mit dem unteren Bereich des Abscheideraums 122 oder mit der Rohrleitung 54 zwischen dem Abscheideraum 122 und der Pumpe 58 verbunden. Nach dem Öffnen des Absperrorgans 144 fließt das überschüssige Prozeßwasser in den Speicherbehälter 14 und wird dort gelagert. Die Lagerung des überschüssigen Prozeßwassers erfolgt solange, bis ein Ausgangsmaterial verarbeitet wird, bei dessen Pyrolyse kein oder kaum Prozeßwasser entsteht, das heißt, der entstehende Prozeßwasser-Massenstrom ist geringer als 10% des Ausgangsmaterial-Massenstromes. Jetzt wird das gespeicherte, überschüssige Prozeßwasser dem Speicherbehälter 140 entnommen und gegebenenfalls zusammen mit im Abscheideraum 122 anfallendem Prozeßwasser in den Pyrolysereaktor eingespeist und – wie weiter oben beschrieben – der Pyrolyse bzw. thermischen Zersetzung unterworfen.

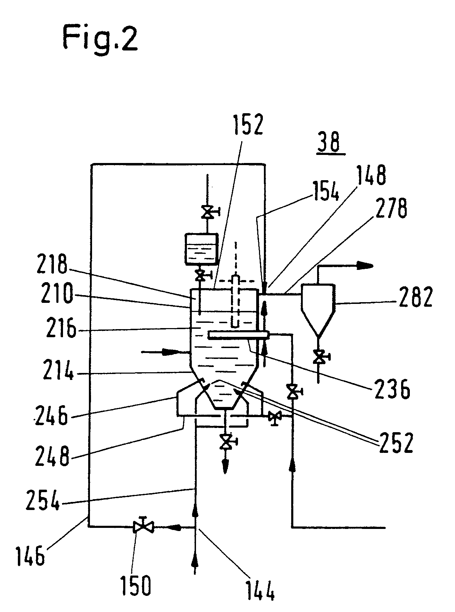

In Fig. 2 ist der Ausschnitt II der Fig. 1 als Einzelheit und als Ausführungsvariante dargestellt. Einzelteile der Anlage gemäß Fig. 1, die auch in der Anlage gemäß Fig. 2 vorhanden sind, besitzen in Fig. 2 Bezugsziffern, die um den Betrag 200 vergrößert sind.

Der Pyrolysereaktor 210 ist im wesentlichen genauso aufgebaut wie der Pyrolysereaktor 10 der Fig. 1. Im Pyrolysereaktor 210 befindet sich das Wirbelbett 216. Oberhalb des Wirbelbettes ist der Gasraum 218 angeordnet, in dem sich das brennbare Pyrolysegas sammelt. An den Gasraum 218 ist die Rohgasleitung 278 angeschlossen, die über den Zyklonabscheider 282 zu der in Fig. 2 nicht dargestellten Kühlstufe führt. Im unteren Bereich des Wirbelbettes 216 sind die Sprühdüsen 252 angeordnet, die an die Rohrleitung 254 angeschlossen sind. Durch die Rohrleitung 254 wird das Prozeßwasser zugeführt.

Im Unterschied zur Anlage gemäß Fig. 1 ist in der Anlage gemäß Fig. 2 eine Abzweigstelle 144 in der Rohrleitung 254 vorgesehen. Von dieser Abzweigstelle führt eine Rohrleitung 146 zur Rohgasleitung 278 und mündet dort an der Anschlußstelle 148 in die Rohgasleitung. Die Mündung der Rohrleitung 146 ist mit mindestens einer Sprühdüse 154 versehen, so daß das durch die Rohrleitung 146 zugeführte Prozeßwasser in die Rohgasleitung 278 eingesprüht wird. Vorzugsweise ist die Sprührichtung der Sprühdüse 154 entgegengerichtet dem Pyrolysegas, das in der Rohgasleitung 278 strömt. Die Sprühdüse 154 und deren Anordnung ist in Fig. 2 nur angedeutet. In die Rohrleitung 146 ist noch ein Absperr- und Regelorgan 150 eingefügt.

Die Anschlußstelle 148 hat einen Abstand vom Pyrolysereaktor 210, der vorzugsweise das 3-fache der lichten Weite der Rohgasleitung 278 beträgt. Die Anschlußstelle 148 befindet sich zwischen dem Pyrolysereaktor und dem Zyklonabscheider 282.

Während des Betriebs der Anlage, der genauso verläuft wie im Zusammenhang mit Fig. 1 beschrieben wurde, wird an der Abzweigstelle 144 das in der Rohrleitung 254 strömende Prozeßwasser aufgeteilt. Durch geeignete Einstellung des Absperr- und Regelorgans 150 wird erreicht, daß ein Teil des zugeführten Prozeßwassers durch die Rohrleitung 254 zu den Sprühdüsen 252 fließt und in das Wirbelbett 216 eingesprüht wird. Der andere Teil des Prozeßwassers fließt durch die Rohrleitung 146 zur Anschlußstelle 148 und wird durch die dort angeordnete Sprühdüse 154 in das heiße Pyrolysegas eingesprüht, das in der Rohgasleitung 278 strömt. Das Pyrolysegas hat an der Anschlußstelle 148 ungefähr jene Temperatur, die im Pyrolysereaktor herrscht.

Durch die vorbeschriebene Maßnahme wird eine Vorkühlung des Pyrolysegases erreicht. Diese Vorkühlung ist besonders dann erforderlich, wenn das Heizrohr 236 von der Decke 152 des Pyrolysereaktors durch den Gasraum 218 vertikal in das Wirbelbett 216 geführt ist. In diesem Fall wird nämlich das Pyrolysegas im Gasraum 218 durch das Heizrohr 236 in unerwünschter Weise zusätzlich erhitzt. Diese zusätzliche Erhitzung des Pyrolysegases wird durch die Einführung von Prozeßwasser in das in der Rohgasleitung strömende heiße Pyrolysegas beseitigt. In Fig. 2 ist das vertikal verlaufende Heizrohr mit gestrichelten Linien eingezeichnet. Zweckmäßig sind mehrere vertikale Heizrohre vorgesehen.

## Ansprüche

1. Verfahren zum Verringern der Nebenprodukte und/oder der darin enthaltenen unerwünschten Verbindungen bei der Erzeugung von Pyrolysegas aus kohlenwasserstoffhaltigem Ausgangsmaterial, insbesondere Abfallmaterial, wobei das Pyrolysegas durch pyrolytische Zersetzung des Ausgangsmaterials in einem Pyrolysereaktor (10) in reduzierender Atmosphäre erzeugt und der vom Pyrolysegas mitgeführte Wasserdampf in einer Kühlstufe (100) als Prozeßwasser niedergeschlagen wird, dadurch gekennzeichnet, daß das Prozeßwasser mindestens teilweise in ein im Pyrolysereaktor (10 ; 210) ausgebildetes, zum pyrolytischen Verarbeiten des Ausgangsmaterials benutztes und bei einer Temperatur oberhalb 650° Celsius arbeitendes Wirbelbett (16 ; 216) eingeführt wird.

2. Verfahren nach Anspruch 1, dadurch gekennzeichnet, daß das Prozeßwasser in der Nähe des Wirbelgaseinlasses (51 ; 251) in daß Wirbelbett (16 ; 216) eingeführt wird.

3. Verfahren nach Anspruch 1 oder 2, dadurch gekennzeichnet, daß das Prozeßwasser in feinverteilter Form in das Wirbelbett (16 ; 216) eingeführt wird.

4. Verfahren nach einem der Ansprüche 1 bis 3, dadurch gekennzeichnet, daß das Prozeßwasser mit einem Massenstrom von mindestens 3 bis 5%, vorzugsweise 10%, bezogen auf den Massenstrom des Ausgangsmaterials, zugeführt wird.

5. Verfahren nach einem der Ansprüche 1 bis 4, bei dem das Pyrolysegas Chlor-, Fluor-, Schwefeloder Cyanverbindungen enthält, dadurch gekennzeichnet, daß ein basisches Bindemittel feinverteilt in das Wirbelbett (16 ; 216) eingebracht wird.

6. Verfahren nach Anspruch 5, dadurch gekennzeichnet, daß als basisches Bindemittel wenigstens ein Stoff aus folgender Gruppe benutzt wird : Calciumcarbonat, Kalkhydrat, Calciumoxid,, Magnesiumcarbonat, Magnesiumoxid, Dolomit oder Natriumhydroxid.

7. Verfahren nach mindestens einem der Ansprüche 1 bis 6, bei dem mehr Prozeßwasser entsteht, als für die Einspeisung in das Wirbelbett geeignet ist, dadurch gekennzeichnet, daß das überschüssige Prozeßwasser in einem Speicherbehälter (140) gespeichert wird und bei der pyrolytischen Zersetzung von Ausgangsmaterial, das kein oder kaum Prozeßwasser entwickelt, in das Wirbelbett (16 ; 216) eingespeist wird.

8. Verfahren nach mindestens einem der Ansprüche 1 bis 7, dadurch gekennzeichnet, daß vor dem Eintritt des Prozeßwassers in das Wirbelbett (216) ein Teil des Prozeßwassers abgezweigt und in das vom Gasraum (218) des Pyrolysereaktors (210) abströmende Pyrolysegas eingeführt wird.

9. Verfahren nach Anspruch 8, dadurch gekennzeichnet, daß das abgezweigte Prozeßwasser in der Nähe des Pyrolysereaktors (210) in die Rohgasleitung (278), vorzugsweise durch mindestens eine Düse (154), eingeführt wird.

10. Verfahren nach Anspruch 8 oder 9, dadurch gekennzeichnet, daß 1/3 bis 1/7, vorzugsweise 1/5 des Prozeßwassers abgezweigt und in das Pyrolysegas eingeführt wird.

## Claims

1. Process for reducing the quantity of by-products and/or undesired compounds contained therein in the generation of pyrolysis gas from hydrocarbon-containing starting material, in particular waste material, the pyrolysis gas being generated by pyrolytic decomposition of the starting material in a pyrolysis reactor (10) in a reducing atmosphere and the water vapour carried over by the pyrolysis gas being precipitated as process water in a cooling stage (100), characterized in that the process water is fed at least partially to a fluidized bed (16 ; 216) which is formed in the pyrolysis reactor (10 ; 210), is used for pyrolytic processing of the starting material and operates at a temperature above 650°C.

2. Process according to Claim 1, characterized in that the process water is fed to the fluidized bed (16 ; 216) in the vicinity of the fluidizing-gas inlet (51 ; 251).

3. Process according to Claim 1 or 2, characterized in that the process water is fed in a finely dispersed form to the fluidized bed (16 ; 216).

4. Process according to one of Claims 1 to 3, characterized in that the process water is fed at a mass flow of at least 3 to 5%, preferably 10%, relative to the mass flow of the starting material.

5. Process according to one of Claims 1 to 4, wherein the pyrolysis gas contains chlorine compounds, fluorine compounds, sulphur compounds or cyano compounds, characterized in that a finely dispersed, basic binder is introduced into the fluidized bed (16 ; 216).

6. Process according to Claim 5, characterized in that at least one material from the group comprising calcium carbonate, hydrated lime, calcium oxide, magnesium carbonate, magnesium oxide, dolomite and sodium hydroxide is used as the basic binder.

7. Process according to at least one of Claims 1 to 6, wherein more process water is produced than is suitable for feeding to the fluidized bed, characterized in that the excess process water is stored in a storage tank (140) and fed to the fluidized bed (16 ; 216) during the pyrolytic decomposition of a starting material which evolves hardly any process water or none at all.

8. Process according to at least one of Claims 1 to 7, characterized in that a part of the process water is diverted, before the process water enters the fluidized bed (216), and introduced into the pyrolysis gas flowing out of the gas space (218) of the pyrolysis reactor (210).

9. Process according to Claim 8, characterized in that the diverted process water is introduced into the crude gas pipe (278) in the vicinity of the pyrolysis reactor (210), preferably through at least one nozzle (154).

10. Process according to Claim 8 or 9, characterized in that 1/3 or 1/7, preferably 1/5 of the process water is diverted and introduced into the pyrolysis gas.

## Revendications

1. Procédé pour réduire les produits secondaires et/ou les composés indésirables qu'ils contiennent, lors de la production de gaz de pyrolyse à partir d'un produit de départ contenant des hydrocarbures, en particulier un produit de récupération, procédé dans lequel le gaz de pyrolyse est produit par décomposition pyrolytique du produit de départ dans un réacteur à pyrolyse (10) sous atmosphère réductrice et la vapeur d'eau entraînée avec le gaz de pyrolyse est condensée en eau de traitement dans un étage de refroidissement (100), caractérisé en ce que l'eau de traitement est introduite, au moins partiellement, dans un lit tourbillonnaire (16 ; 216) constitué dans le réacteur à pyrolyse (10 ; 210), servant au traitement pyrolytique du produit de départ et fonctionnant à une température supérieure à 650°C.

2. Procédé selon la revendication 1, caractérisé en ce que l'eau de traitement est introduite dans le lit tourbillonnaire (16 ; 216) à proximité de l'entrée de gaz tourbillonnaire (51 ; 251).

3. Procédé selon la revendication 1 ou 2, caractérisé en ce que l'eau de traitement est introduite dans le lit tourbillonnaire (16 ; 216) sous forme de fine dispersion.

4. Procédé selon l'une des revendications 1 à 3, caractérisé en ce que l'eau de traitement est introduite avec un flux massique d'au moins 3 à 5%, de préférence 10%, rapporté au flux massique du produit de départ.

5. Procédé selon l'une des revendications 1 à 4, dans lequel le gaz de pyrolyse contient des composés de chlore, de fluor, de soufre ou de cyanure, caractérisé en ce qu'un liant basique est introduit dans le lit tourbillonnaire (16 ; 216) sous forme de fine dispersion.

6. Procédé selon la revendication 5, caractérisé en ce qu'on utilise comme liant basique au moins un des produits du groupe suivant : carbonate de calcium, hydroxyde de calcium, oxyde de calcium, carbonate de magnésium, oxyde de magnésium, dolomite ou hydroxyde de sodium.

7. Procédé selon au moins l'une des revendications 1 à 6, dans lequel il se forme plus d'eau de traitement que nécessaire pour l'alimentation du lit tourbillonnaire, caractérisé en ce que l'eau excédentaire est stockée dans un réservoir (140) et introduite dans le lit tourbillonnaire (16 ; 216) lors de la décomposition pyrolytique du produit de départ, qui ne produit pas ou très peu d'eau de traitement.

8. Procédé selon au moins l'une des revendications 1 à 7, caractérisé en ce qu'une partie de l'eau de traitement, avant que celle-ci ne pénètre dans le lit tourbillonnaire (216), est dérivée et introduite dans le gaz de pyrolyse sortant de la chambre de gaz (218) du réacteur à pyrolyse (210).

9. Procédé selon la revendication 8, caractérisé en ce que l'eau de traitement dérivée est introduite dans la conduite de gaz brut (278) à proximité du réacteur à pyrolyse (210), de préférence à travers au moins une tuyère (154).

10. Procédé selon la revendication 8 ou 9, caractérisé en ce que 1/3 à 1/7, de préférence 1/5, de l'eau de traitement est dérivée et introduite dans le gaz de pyrolyse.

Fig.1

# Fig.2